# EUROPEAN PATENT APPLICATION

(11) **EP 2 670 156 A1**
(43) Date of publication of application: **04.12.2013**
(21) Application number: 12305608.7
(22) Date of filing: 01.06.2012
(51) Int. Cl.: H04N 21/433, H04N 21/6587, H04N 21/218

(54) **Interactive audio/video broadcast system, method for operating the same and user device for operation in the interactive audio/video broadcast system**

(71) Applicant: Thomson Licensing, 92130 Issy-les-Moulineaux (FR)
(72) Inventor: Borsum, Malte, 30655 Hannover (DE); Kochale, Axel, 31832 Springe (DE); Abeling, Stefan, 29690 Schwarmstedt (DE)
(74) Representative: Thies, Stephan

(57) **Abstract**

An audio/video (AV) broadcast system 2, a method for operating the same and a user device for operation in the interactive AV broadcast system. The AV broadcast system comprises an AV capture unit 4, an editing unit 12 and a user device 18. A plurality of video streams is captured by the AV capture unit 4, a main AV signal A is broadcast via a broadcast channel to the plurality of user devices 18. A user request R is transmitted from the user device 18 to the AV editing unit 12 and is indicative to information about a topic for an edited replay clip C. After processing of AV content at the AV editing unit 12 so as to generate the edited replay clip C in response to the user request R, said reply clip C is broadcast using free bandwidth of the broadcast channel. A copy of the replay clip C is cached at the user device 18 and reproduced upon reception of a user command.

## Description

### FIELD OF THE INVENTION

The invention relates to an interactive audio/video broadcast system and a method for operating the same. Further, the invention relates to a user device for operation in an interactive audio/video broadcast system.

### BACKGROUND

Television is a widespread and powerful but relatively inflexible medium. A viewer's choice is confined to deciding whether to watch at all, selecting from at most a few hundred choices and the adaption of their personal life to the broadcast schedule. If a user decides to watch a certain TV production, for example a live broadcast of a soccer match, there is no option to influence the presented content he or she has to watch the production as it is broadcast. However, the viewer may prefer watching a replay of a certain scene of the match in more detail or in slow motion. Nowadays, replays are generated by a production team and broadcast at a later point in time instead of the normal program on a main broadcast signal. There is no interactivity and action that happens during the replay is missed even if the user prefers to watch it.

A digital video recorder (DVR) provides a viewer with freedom of timing. In addition, modern DVRs offer a pause, rewind and fast forward option. However, there is no significant change to the nature of the viewing experience. Especially with respect to replays, the task to produce a replay is often much too complex for a user to be done by himself. It is very likely that the viewer misses bigger parts of a live event while seeking the right start and end points for the desired replay.

The advent of video broadcast over internet changed the control relationship between viewer and broadcaster. Such video on demand services came up with increasing available bandwidth of modern telecommunication networks. In combination with modern video protocols, a viewer can nowadays see high definition videos via the internet. The video starts up within a few seconds and any point in the video stream may be selected for replay in short time. The immediate benefit of these developments is that viewers can now watch what they want and whenever they want outside the control of large institutional gatekeepers.

However, video on demand systems still suffer from limited bandwidth which depends on the actual network load and the place of residence of the user. In document US 6,496,980 B1, a method for providing a streaming video on demand service is suggested. Upon a user request, a certain segment of previously watched video content may be reviewed with higher resolution due to a retransmission of the respective video content. However, there is no interactivity for the user because provision of the high resolution video content is restricted to content which he or she watched before.

A more inactive concept which is based on a video over internet application is disclosed in US 2010/0043040 A1. A user is provided with an interactive user interface, which is especially suitable for interactively watching sports videos. The broadcaster offers a plurality of different camera views or certain replay clips, for example showing a goal or foul scene to the viewer. The user may select the video content he or she prefers. However, the user's choice is restricted to the options which are offered by the broadcaster.

In document US 2010/0094686 A1, an interactive event client is disclosed which provides the user with the option to feedback to a performing artist in an event being watched. This interactive feedback may be a voting, for example by help of an icon which may be indicative to applause, a shout out or the like. The user's feedback may be filtered by the producers of the live event before the feedback is communicated to the performing artist. Further, the user may select a variety of different camera angles showing the live event from different viewing angles. However, this live feedback is restricted to a communication from a user to the artist.

A further concept for an on-demand instant replay multimedia system is disclosed in US 2009/0037962 A1. The on-demand service provides a viewer with an instant replay of a live television transmission, for example a soccer game. A replay clip may be delivered to a user equipment such as a smart phone. This may be an attractive option when watching a live television transmission in a great audience. However, there is no feedback option for the viewer, the available replay clips are limited to what is provided by a broadcaster.

Video on-demand systems may be an option to offer more interactivity for the user but suffer from a general problem. For large audiences, for example at big sports events like a world championship or champions league final, an extreme high bandwidth would be necessary to provide all users with individual data. For example, replay clips starting at a user selected point in time and having further a user selected camera view i. e. individual content for each of the users, produce massive data downloads. It should be noticed that in a typical broadcast situation of a big sports event, about 20 % of the folks are watching for example a final game of a soccer world championship. Hierarchical caching architectures in the data network could solve this problem. However, this is a very expensive solution. There would be a need for a caching server for every single street in a city to reach a manageable bandwidth, e. g. 10 gigabytes per second for a multimedia server providing service to about 100 to 200 users.

A cache memory at the user terminal could solve the bandwidth problem. However, a cache memory can only store what has been downloaded to the user before, i. e. there is no interactivity. If, for example, the action to be replayed has happened outside of his particular view, the user will have no option to watch the desired replay showing for example a different camera view.

### SUMMARY

It is an object of the invention to provide an interactive audio/video broadcast system, a method for operating an interactive audio/video broadcast system and a user device for operation in such an interactive audio/video broadcast system having a high level of interactivity even at limited available bandwidth for broadcast of audio/video content.

In one aspect of the invention, a method for operating an interactive audio/video broadcast system is provided. Within the context of this specification the term "audio/video" will be also referred to as "AV". The AV broadcast system comprises an AV capture unit, an AV editing unit and at least one user device. A plurality of video streams is captured by the AV capture unit and communicated to the AV editing unit. For example, an AV capture unit comprises a plurality of cameras ranging from classical television cameras to modern camera concepts like panorama cameras, 3D cameras or the like. An AV editing unit may be for example a cutting room at a television station or an outside broadcasting van. A main AV signal is broadcast via a broadcast channel from the AV editing unit to a plurality of user devices. The main AV signal, which may be an AV signal of a classical television channel, comprises AV content of at least one of the captured AV streams. Broadcast of the main AV signal may be performed using wireless or wired communication networks ranging from wireless satellite based analogue or digital television broadcast networks or terrestrial wireless broadcast networks to analogue or digital cable television and internet protocol (IP) based television broadcast networks.

A user request is transmitted from the user device, which may be for example a television set, a set top box connected to a suitable display or a suitable configured personal computer, to the AV editing unit. Transmission of the user request may be performed using a return channel of a service which provides the main broadcast channel. For digital cable television networks and IP based broadcast networks, this return path is typically available.

According to another aspect of the invention, the user request is transmitted to the AV editing unit via a further service which preferably uses a further network. The further service may be for example a social network, a chat or talk application or even a short message service which is typically provided in cellular based mobile networks. The further network may be for example a wired digital subscriber line (DSL) or a wireless link in a 3G wireless network.

The user request comprises information about a topic for an edited replay clip which comprising a segment of at least one of the captured AV streams. At the AV editing unit, AV content of the at least one captured AV streams is processed so as to generate the edited replay clip in response to the user request. Processing of the AV content and generation of the replay clip may be performed by a professional production team, for example at the outside broadcasting van which is located near to a captured and broadcast live event.

Subsequently, the edited replay clip is broadcast using free bandwidth of the broadcast channel. In other words, broadcast of the replay clip is performed silently and without affecting the transmission of the main AV signal. There is a priority for transmission of the main AV signal which means there is enough bandwidth for the main AV signal at any time. Broadcast of the replay clip is performed on and limited to free available bandwidth.

A copy of the replay clip is cached at the user device which preferably comprises a suitable cache memory for storing replay clips. The cached copy of the replay clip is reproduced at the user device upon reception of a user command to do so.

According to an aspect of the invention, a flag is displayed at the user terminal, i. e. at the user's screen, wherein the flag indicates a ready-for-reproduction status of the replay clip. A flag may be displayed if a copy of the replay clip is available at the cache memory of the user device. It is not necessary that this copy is complete. A flag may also be displayed if a part of the copy which is suitable for replay is available at the cache memory of the user device. In other words, the remaining transfer time for the copy should be less than the playback time for the received part of the replay clip. The displayed flag may be for example an icon or a menu. Acoustical signals like a beep may be used too. Upon display of said flag, the user may select a type of display for the available clip, for example a picture in picture display, full screen display, looping reproduction of the clip or display thereof on a secondary screen.

Advantageously, the method according to aspects of the invention provides a user with an interactive on-demand but live broadcast service. There are no individual streams like in an on demand system and therefore no extremely high bandwidth is necessary for the broadcast service even if there are many users. The user is offered the option to watch for example a slow motion replay clip he or she desires to see and which is preferably prepared by a professional production team at the AV editing unit in response to his or her request.

According to another aspect of the invention, a metadata script is broadcast using free bandwidth of the broadcast channel. The metadata script is broadcast in advance to broadcast of the replay clip and the metadata script announces the availability of at least one replay clip. A user may select at least one of the announced replay clips which are further expected to be received at the user device in near future. Accordingly, copies of selected clips only will be cached at the user device in accordance with the user's selection. A semi-automatic mechanism for requesting the replays is proposed. Replays may be requested according to a users choice made by a user input, according to a stored user profil with preferences to select clips of a certain category automatically or as far as the local storage provides the capacity, a certain number of the last replays are cached. These mechanism and the metadata script to execute the request for replays are described in more detail in the following.

Especially is the AV content is broadcast to many users, there may be a great number of user requests received at the AV editing unit. In response, a plurality of different replay clips is provided by the AV editing unit. However, a user may be interested in some of these replay clips only and accordingly he or she may make up his or her choice based on information which is provided by the broadcast script. Replay clips which are selected by the user will be cached at the user device only which leads to savings in cache memories space.

According to another aspect of the invention, replay clips are assigned to predetermined topics at the AV editing unit. Predetermined topics may be for example: foul, goal, attack, team red, etc. Replay clips are cached at the user device according to a user profile. This user profile is present at the user device and indicates a user selected permanent demand for replay clips pertaining to at least one of the predetermined topics. For example, the user profile may indicate that the user demands for replay clips pertaining to his or her favorite soccer club which may be team red. Replay clips which pertain to the at least one selected topic are cached at the user device only; again, this will lead to savings in cache memory space.

Preferably, the at least one replay clip comprises AV content which was not previously broadcast via the main AV signal. For example, there may be bigger images such as panorama views having a very high resolution at some places and therefore to much detail for display or inacceptable high demand for a bandwidth in the broadcast network. The user may select for example a replay of a certain area of a panorama view which has not been a displayed in the main AV signal.

According to another aspect of the invention, an interactive AV broadcast system comprising an AV capture unit, an AV editing unit and a user device is provided. A plurality of video streams is captured by the AV capture unit and transmitted to the AV editing unit. The AV broadcast system is configured to broadcast a main AV signal via a broadcast channel from the AV editing unit to a plurality of user devices. The main AV channel comprises AV content of at least one of the captured AV streams. A user request is transmitted from the user device to the AV editing unit, wherein the user request comprises information about a topic for an edited replay clip comprising a segment of at least one of the captured AV streams. AV content of at least one of the captured AV streams is processed at the AV editing units so as to generate the replay clip in response to the user request. The edited replay clip is broadcast using free bandwidth of the broadcast channel. A copy of the at least one replay clip is cached at the user device and reproduced at the user device upon reception of a respective user command.

According to further aspects of the invention, a user device for operation in an interactive AV broadcast system which further comprises an AV capture unit and an AV editing unit is provided. A plurality of video streams is captured by the AV capture unit and communicated to the AV editing unit. A main AV signal is broadcast via a broadcast channel to a plurality of user devices. The main AV signal comprises AV content of at least one of the captured AV streams. The user device is configured to transmit a user request to the AV editing unit, wherein the user request comprises information about a topic for an edited replay clip comprising a segment of at least one of the captured AV streams. An edited replay clip is received at the user device and comprises edited AV content of at least one of the captured AV streams. The replay clip has been processed at the AV editing unit in response to the user request and is received at the user device via free bandwidth of the broadcast channel. A copy of the at least one replay clip is cached in a cache memory of the user device. The cached copy is reproduced upon a user command.

Same or similar advantages which have been already mentioned for the method of operating an AV broadcast system apply to the interactive AV broadcast system and to the user device for operation in an interactive AV broadcast system in a same or similar way and are therefore not repeatedly mentioned.

### BRIEF DESCRIPTION OF DRAWINGS

Further aspects and characteristics of the invention ensue from the following description of the preferred embodiments of the invention with reference to the accompanying drawings, wherein
FIG. 1 is a simplified diagram illustrating an interactive AV broadcast system,
FIG. 2 is a simplified flow chart illustrating the communication between an AV editing unit, a user device and a user,
FIG. 3 is a simplified diagram illustrating a time dependent data rate as a ratio of a maximum available bandwidth of a broadcast channel for a main AV signal and for transmission of a replay clip,
FIG. 4 is a simplified tiled panorama view,
FIG. 5 is a simplified screenshot of a user device comprising flags indicating a ready-to-watch status of a replay clip,
FIG. 6 is a simplified screenshot illustrating the display of a metadata script announcing four replay clips and
FIG. 7 is a simplified detailed view to a remote control for the user device.

### DETAILED DESCRIPTION OF AN EXAMPLE EMBODIMENT

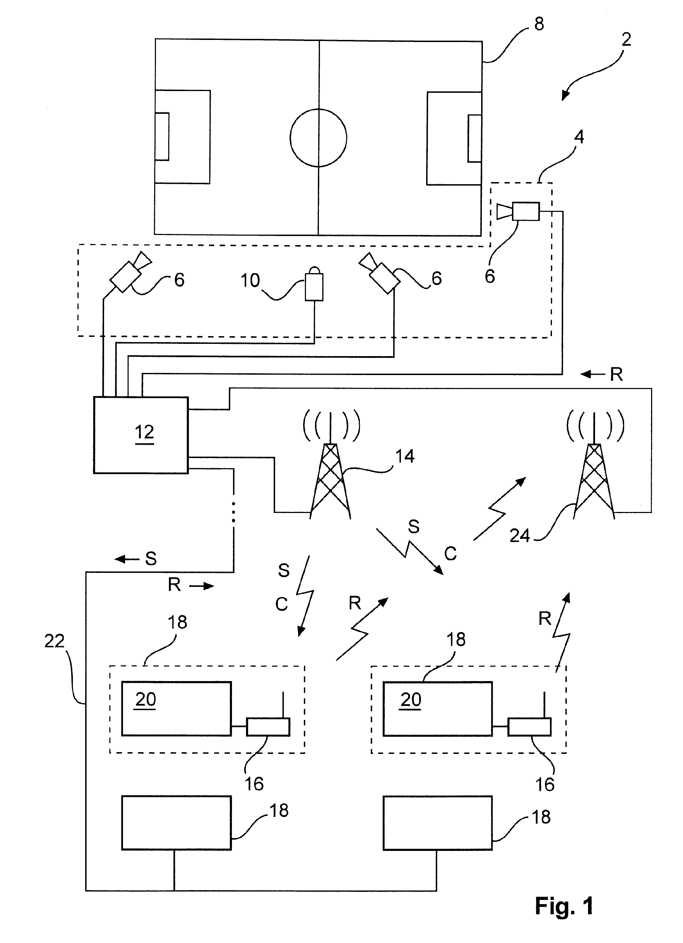

FIG. 1 is a simplified diagram showing an AV broadcast system 2. The AV broadcast system 2 comprises an AV capture unit 4 having a plurality of cameras, wherein by way of an example only, three conventional TV cameras 6 are arranged at a soccer field 8 so as to capture a live event. Further, the AV capture unit 4 comprises a high resolution 180° panorama camera 10 for capturing the soccer game taking place at the soccer field 8. The AV capture unit 4 may further comprises additional cameras (not shown), for example hand operated cameras, 3D cameras, etc. The AV capture unit 4, i. e. the cameras 6, 10 are capturing a plurality of video streams which are communicated to an AV editing unit 12. At the AV editing unit 12, a main AV signal S is generated e. g. by selecting, cutting and commenting on the available video streams. The main AV signal S is broadcast via a broadcast channel. Broadcasting of the main AV signal S may be performed wireless, for example via a terrestrial broadcasting tower 14 using wireless analogue or digital transmission technology. The wireless main AV signal S may be received by a set top box 16 of a user device 18. The set top box 16 may be connected to a suitable display 20 for displaying the main AV signal S. Further, the main AV signal S may be transmitted via a cable network 22 providing a link to further user devices 18. The cable network 22 may be for example a television cable network or an IP based high speed data network.

A user of a user device 18 may transmit a user request R to the AV editing unit 12 wherein the user request R comprises information about a topic for an edited replay clip comprising a segment of at least one of the captured AV streams. For example, an special event such as a goal or a foul takes place on the soccer field 8. The user of a user device 18 likes to see this special event again but in more detail, in higher resolution or from a different viewing angle. Accordingly, the user request R may be indicative to one of these certain topics. The user request R may be transmitted to the AV editing unit 12 via a return channel of the cable network 22. According to another embodiment of the invention, the user request R is communicated via a further service provider and preferably via a further medium for example via a wireless 3G network link. The communication of the user request R may include the use of applications of third party services like chat, talk or social network services. If the user request R is communicated via a wireless link to the AV editing unit 12, for example the set top box 16 sends a signal to a further terrestrial transmitter mast 24 and the user request R is subsequently communicated to the AV editing unit 12. However, the third party service may also be provided via the cable network 22, for example via a DSL line.

Upon reception of the user request R, a professional editing team at the AV editing unit 12 processes AV content which is provided by the AV capturing unit 4 so as to generate an edited replay clip in response to the user request R. Subsequently, this replay clip C will be broadcast to the user devices 18 via free bandwidth of the broadcast channel. A copy of the replay clip C will be cached at the user device 18 and may be reproduced at the user device 18 upon reception of a user command.

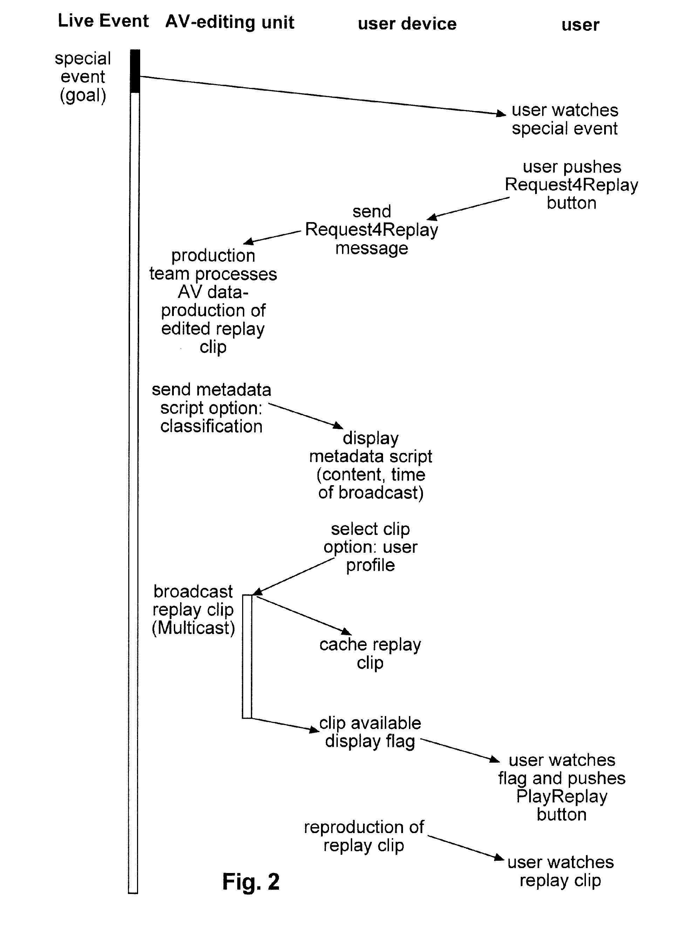

Further details of the communication between the AV editing unit 12, a user device 18 and a user of the user device 18 will be explained by making reference to the simplified flow chart of FIG. 2.

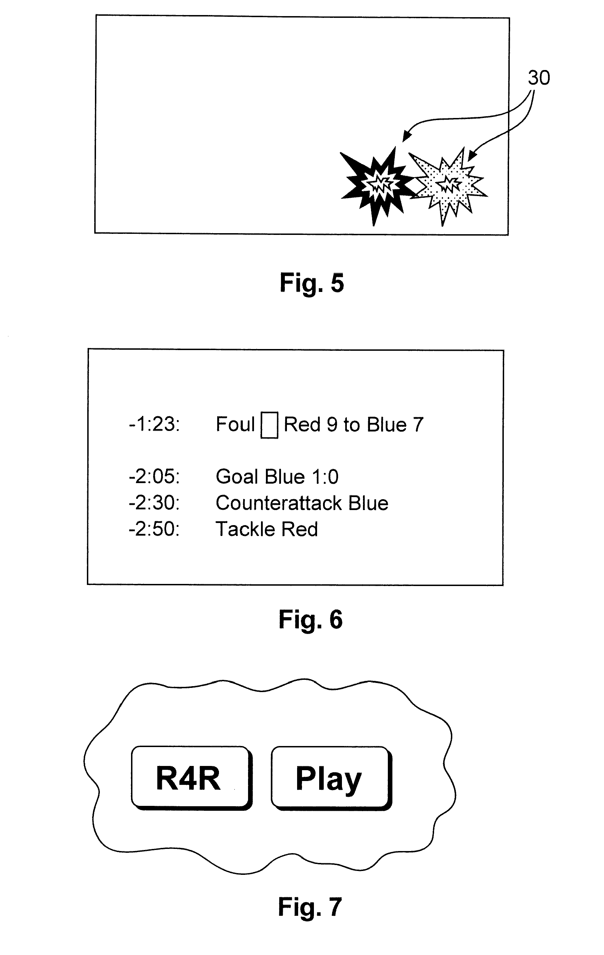

A live event, for example a soccer match takes place and a special event, for example a goal is scored. The user watches this special event and pushes a Request4Replay-button at a remote control of the user device 18. A detailed view of a corresponding part of such a remote control is shown in FIG. 7. Upon reception of this user command, the user device 18 sends a Request4Replay-message to the AV editing unit 12. The production team at the AV editing unit 12 generates an edited replay clip C according to the received Request4Replay-message (which is an example for a user request R). This Request4Replay-message may be expressed in a small script and in its simplest case it contains a simple flag only. The script of this user request may look as follows:

```
<usercommand>
        <request4replay />
       </usercommand>
```

However, the script can contain more detailed information, e. g. the desired area where the action was, a player that was involved, predefines special actions like goal, foul etc. The Request4Replay-message may be further defined by using a mouse like device for selecting a specific area on a screen by a remote control using the number block and T9 for sending some short message about the requested replay, by voice control, etc.

A further example for a user request may look as follows:

```
<usercommand>
        <request4replay>
          <time>3:17:47pm</time>
          <description>show goal 2 with 5 last
       passes</description>
        </request4replay>
       </usercommand>
```

The user requests the production team at the AV editing unit 12 to provide him with information about the last two goals within the last five passes. Another example for a user request is given by the following script:

```
<usercommand>
        <request4replay>
          <time>3:17:47pm</time>
          <description>show goal 3min ago</description>
        </request4replay>
       </usercommand>
```

The user desires to watch a goal which happened three minutes ago. Another user command may be directed to a certain runtime and a certain AV source. For example by the following script:

```
<event>
        <replay>
          <start>10:11:12.13</start>
          <duration>0:01:02.03</duration>
          <source>123.124.125.126:1234</source>
        </replay>
       <event>
```

or, according to an alternative embodiment by the following script:

```
<event>
        <replay>
          <start>10:11:12.13</start>
          <duration>0:01:02.03</duration>
          <source>Channel 21, Stream 5</source>
        </replay>
       <event>
```

A more complex user request specifies a certain time, a certain location the user desires to look at and for example a zoom factor for a 180° high resolution panorama camera. The script for such a user request may look as follows:

```
<usercommand>
        <request4replay>
          <time>3:17:47pm</time>
          <lookatX>-12.425</lookatX>
          <lookatY>+1.23</lookatY>
          <zoom>40.22</zoom>
        </request4replay>
       </usercommand>
```

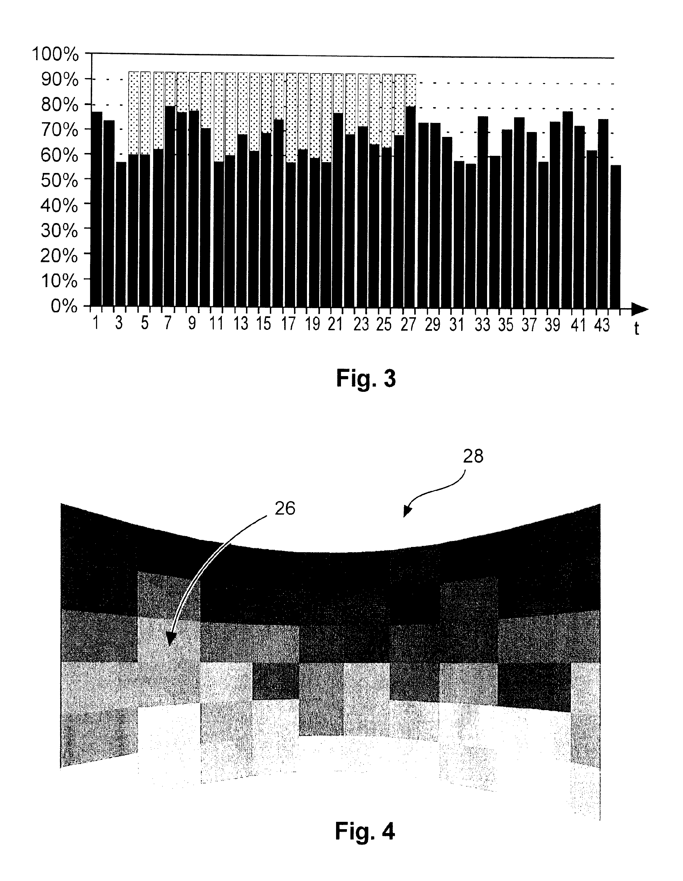

A simplified tiled panorama view which may be provided by a 180° panorama camera 10 is illustrated in FIG. 4. By way of an example only, the mentioned script specifies a user request for selecting a detailed zoomed view of the tile 26 within the panorama view 28.

The production team at the AV editing unit 12, especially if a very popular live event is broadcast, will receive a plurality of user requests R. The editing team may classify the produced reply clips and may communicate a metadata script to the user device 18 before broadcast of the replay clip wherein the metadata script is indicative to a subject or a topic of the replay clips which will be broadcast in near future. This script may also be broadcasted at the beginning of the event and on a regular basis to indicate the available categories that a user can select in his profile and with his request. A metadata script may look as follows:

```
<event>
        <categorysupport>
          <like>team red</like>
          <like>team blue</like>
          <like>goals</like>
          <like>defence</like>
          <like>offence</like>
          <like>goalkeeper</like>
          <like>referee</like>
          <like>fouls</like>
          <like>bloody fouls</like>
        </categorysupport>
       </event>
```

This metadata script is indicative to content of a replay clip. According to the embodiment, the content pertains to team red or team blue or to certain special events like goals, defense, offence, fouls or bloody fouls or to certain actors in the live event such as the goal keeper or the referee. Upon reception and display of the metadata script, the user may select certain categories for replay clips he or she is interested in. FIG. 6 is a simplified screenshot showing a display of a metadata script, wherein a content of upcoming replay clips and a time of broadcast are displayed.

The response, again, may be communicated via a script which may be the following:

```
<usercommand>
        <request4replay>
          <time>3:17:47pm</time>
          <like>team red</like>
          <like>goals</like>
          <like>bloody fouls</like>
        </request4replay>
       </usercommand>
```

Accordingly, the user of the user device 18 is interested in goals and fouls and actions of team red taking place at the given runtime of 3:17:47 pm.

According to another embodiment of the invention, there is a user profile at the user device 18, wherein the user profile defines a permanent demand of the user for replay clips which are related to topics which are specified in the user profile. For example, the user may be a fan of a certain soccer club and desires to watch every goal of his favorite team in slow motion. According to this embodiment, the user device 18 may automatically request and/or cache the respective clips upon their broadcast.

Subsequently, to broadcast the metadata script, the broadcast of the edited replay clips starts. It should be noticed, this is a multicast or broadcast to all user devices 18 and no video on demand service. The significant advantage is that a limited bandwidth is sufficient for providing the respective service. The replay clip is broadcast using free bandwidth of a broadcast channel which is illustrated in the simplified diagram of FIG. 3.

In the diagram of FIG. 3, there is a data rate as a ratio of a maximum available bandwidth of the broadcast channel. The main AV signal has a variable data rate which is illustrated by solid columns. At the point in time "4", the download of the replay clip starts (grey columns), wherein only a free bandwidth is used for a transmission of the replay clip. Further, there is a safety margin of available bandwidth for the main AV signal at every point in time. This means that the download of the replay clip does not exploit the full available bandwidth. At point in time "27", broadcast of the replay clip has finished and a copy of said replay clip is available at the user device 18.

According to an embodiment of the invention, the user is shown a flag 30 on the display 20 of the user device 18 as exemplarily shown in the screenshot of FIG. 5. The flag 30 may be indicative to the available replay clip and by help of colored buttons at the remote control the user may select the available replay clip. A further option is a confirmation of the selected replay clip by pushing a play button at the remote control (see FIG. 7).

Subsequently, the reproduction of replay clips starts at the user device 18 and the user may watch the selected replay clip according to his individual selection or according to his preferences stored in a user profile.

Although the invention has been described hereinabove with reference to specific embodiments, it is not limited to these embodiments and no doubt further alternatives will occur to the skilled person that lie within the scope of the invention as claimed.

## Claims

1. A method for operating an interactive audio/video (AV) broadcast system (2) comprising an AV capture unit (4), an AV editing unit (12) and a user device (18), wherein a plurality of video streams is captured by the AV capture unit (4) and transmitted to the AV editing unit (12), the method comprising the steps of:
a) broadcasting a main AV signal (S) via a broadcast channel from the AV editing unit (12) to a plurality of user devices (18), wherein the main AV signal (S) comprises AV content of at least one of the captured AV streams,
b) transmitting a user request (R) from the user device (18) to the AV editing unit (12), wherein the user request (R) comprises information about a topic for an edited replay clip (C) comprising a segment of at least one of the captured AV streams,
c) processing AV content of at least one of the captured AV streams at the AV editing unit (12) so as to generate the edited replay clip (C) in response to the user request (R),
d) broadcasting the replay clip (C) using free bandwidth of the broadcast channel,
e) caching a copy of the replay clip (C) at the user device (18) and
f) reproducing the cached copy of the replay clip (C) at the user device (18) upon reception of a user command.

2. The method of operating an AV broadcast system (2) according to claim 1, further comprising the step of:
a) broadcasting a metadata script using free bandwidth of the broadcast channel, wherein the metadata script is broadcast in advance to broadcast of the replay clip (C), and wherein the metadata script announces the availability of at least one replay clip (C) at the AV editing unit (12),
b) receiving a user request (R) for at least one of the announced replay clips (C) at the user device (18) and
c) caching a copy of at least one of the announced and broadcast replay clips (C) at the user device (18) according to the user request (R).

3. The method of operating an AV broadcast system (2) according to claim 1 or 2, further comprising the steps of:
a) assigning replay clips (C) to predetermined topics at the AV editing unit (12),
b) caching replay clips (C) at the user device (18) according to a user profile, wherein said replay clips (C) relate to at least one predetermined topic, and wherein the user profile which is available at the user device (18) indicates a user selected permanent demand for replay clips (C) pertaining to at least one predetermined topic and which replay clips (C) pertaining to the at least one selected topic are cached at the user device (18) only.

4. The method of operating an AV broadcast system (2) according to one of the preceding claims, wherein the user request (R) is transmitted to the AV editing unit (12) via a return channel of a service which provides the main broadcast channel.

5. The method of operating an AV broadcast system (2) according to one of claims 1 to 3, wherein the user request (R) is transmitted to the AV editing unit (12) via a further service, which preferably uses a further network.

6. The method of operating an AV broadcast system (2) according to one of the preceding claims, further comprising the step of: displaying a flag (30) at the user device (18) which indicates a ready-for-reproduction status of the replay clip (C) if a copy or a part of a copy of the replay clip (C) which is suitable for replay is available in a cache memory of the user device (18).

7. The method of operating an AV broadcast system (2) according to one of the preceding claims, wherein the at least one replay clip (C) comprises AV content which has not been previously broadcast via the main AV signal (S).

8. A user device (18) for operation in an interactive audio/video (AV) broadcast system (2) which further comprises an AV capture unit (4) and an AV editing unit (12), wherein a plurality of video streams is captured by the AV capture unit (4) and transmitted to the AV editing unit (12), and a main AV signal (S) is broadcast via a broadcast channel to a plurality of user devices (18), and wherein the main AV signal (S) comprises AV content of at least one of the captured AV streams, wherein the user device (18) is configured to:
a) transmit a user request (R) to the AV editing unit (12), wherein the user request (R) comprises information about a topic for an edited replay clip (C) comprising a segment of at least one of the captured AV streams,
b) receive an edited replay clip (C) which comprises edited AV content of at least one of the captured AV streams, wherein the replay clip (C) has been processed at the AV editing unit (12) in response to the user request (R) and wherein the replay clip (C) is received via free bandwidth of the broadcast channel,
c) cache a copy of the at least one replay clip (C) in a cache memory and
d) reproduce the cached copy of the replay clip (C) upon a user command.

9. An interactive audio / video (AV) broadcast system (2) comprising an AV capture unit (4), an AV editing unit (12) and a user device (18), wherein a plurality of video streams is captured by the AV capture unit (4) and transmitted to the AV editing unit (12), wherein the AV broadcast system (2) is configured to:
a) broadcast a main AV signal (S) via a broadcast channel from the AV editing unit (12) to a plurality of user devices (18), wherein the main AV channel (S) comprises AV content of at least one of the captured AV streams,
b) transmit a user request (R) from the user device (18) to the AV editing unit (12), wherein the user request (R) comprises information about a topic for an edited replay clip (C) comprising a segment of at least one of the captured AV streams,
c) process AV content of at least one of the captured AV streams at the AV editing unit (12) so as to generate the replay clip (C) in response to the user request (R),
d) broadcast the edited replay clip (C) using free bandwidth of the broadcast channel,
e) cache a copy of the at least one replay clip (C) at the user device (18) and
f) reproduce the stored copy of the replay clip (C) at the user device (18) upon reception of a user command.
